# EUROPEAN PATENT APPLICATION

(11) **EP 2 599 912 A1**
(43) Date of publication of application: **05.06.2013**
(21) Application number: 11191395.0
(22) Date of filing: 30.11.2011
(51) Int. Cl.: D06F 58/20

(54) **Heat pump laundry drying appliance**

(71) Applicant: Electrolux Home Products Corporation N.V., 1130 Brussel (BE)
(72) Inventor: Pillot, Sergio, 33080 Porcia (PN) (IT); Zandona', Stefano, 33080 Porcia (PN) (IT)
(74) Representative: Nardoni, Andrea

(57) **Abstract**

A drying appliance comprising a drying chamber 1, a drying air circuit including an air inlet path (2) connected to a side of the drying chamber (1), an air outlet path (3) connected to the other side of the drying chamber (1), and a drying air fan (7) positioned along the air circuit, a heat pump system including a heat pump compressor (4), a first heat exchanger (5) for heating the refrigerant and arranged at the air inlet path (2), a second heat exchanger (6) for cooling the refrigerant and heating the drying air and arranged downstream of the first heat exchanger (5), and a third heat exchanger (9), provided outside the drying air circuit, wherein diverting valves (20, 21) provided between the second heat exchanger (6) on one hand and the first heat exchanger (5) and the third heat exchanger (9) on the other hand and between the first heat exchanger (5) and the third heat exchanger (9) on one hand and the compressor (4) on the other hand, respectively, are adapted to selectively connect the second heat exchanger (6) either to the first heat exchanger (5) or to the third heat exchanger (9) and the compressor (4) either to the first heat exchanger (5) or to the third heat exchanger (9), and wherein the air inlet path (2) and the air outlet path (3) can be either connected to each other in a closed loop, to define a condense type dryer wherein the second heat exchanger (6) is connected to the first heat exchanger (5) and the latter to the compressor (4) or opened to the ambient outside the cabinet to define a vented type dryer wherein the second heat exchanger (6) is connected to the third heat exchanger (9) and the latter to the compressor (4)

## Description

### Field of technology

The present invention relates to an appliance intended for drying clothes, having an article drying chamber, where the clothes to be dried are introduced, and a heat pump system for supplying heated dried air to the article drying chamber. In particular said household appliance may be a tumble dryer or a washer-dryer, that is a laundry washing machine with additional drying function.

### Background

Generally, a drying appliance (e.g. a tumble dryer, cabinet dryer) includes a drying chamber for the articles to be dried, i.e. clothes, which chamber can be (it is the case of tumble dryer) rotatably supported within an outer casing and made to rotate by means of a driving device, typically including an electric motor connected to the drying chamber e.g. via a belt.

A drying air inlet path, e.g. a duct, is normally connected to the drying chamber on one side, and an exhaust path, e.g. another duct, starts from the other side of the drying chamber, while a fan draws air through the inlet path and forces it through the drying chamber, from which the air exits via the exhaust duct. Basically, the dryers can be of a vented type, in which the drying air is taken from the outside environment and exhausted to the outside environment after having been used to dry the clothes, and a condense type, in which the air is circulated into a closed loop circuit including a heat pump system.

In a simple and economic vented type dryer, the air is heated, usually by means of an electric heater, before being delivered to the drying chamber. This type of dryer is economic when constructed and quick when used, but is very energy consuming and measures should be taken to avoid clothes damages due to the high temperature.

In the condenser type dryer, the exhaust path is normally connected to the inlet path, in a closed loop, and a condenser (e.g. air to air exchanger or heat pump evaporator) is used to remove the moisture from the air after passing through the drying chamber and the clothes.

Air is conducted along the inlet path and is heated by the condenser, at the same time lowering the temperature of the cooling device within the heat pump circuit. Then the air, moved by the fan, is forced into and through the drying chamber and dries the clothes thereinside. While running along the exhaust path, the air passes through an air to air exchanger or heat pump evaporator and the moisture in the air is condensed and removed therefrom.

The condense dryer has a greater efficiency, requires less energy and does not need an exhaust to the environment, but requires longer drying time.

In order to avoid the above drawbacks and to increase efficiency of the dryers, a hybrid dryer has been designed, in which a heat pump is mounted in a vent type dryer.

### loop system.

US Patent 7,347,009 discloses a clothes dryer with a dehumidifier, so that the dryer also dehumidifies ambient air during the drying process. This solution is particularly advantageous during the summer, when the ambient air humidity and temperature are normally higher, but can create some problems during cooler seasons, particularly in winter since the ambient air of the room where the clothes dryer is located tend to decrease

Another drawback is that when the moisture of the drying air condenses, the water produced must be collected by a water collecting system, provided integrally with the dryer, into a tank, and the tank must be emptied by the user when it is full.

An improved solution which is capable to adapt to different environment conditions would be highly appreciated.

### Objects of the disclosure

It is an object of the present disclosure to overcome at least some of the problems associated with the prior art.

A further object of the present invention is to provide a water bearing drying appliance, which may be a tumble dryer or a washer-dryer, i.e. a laundry washing machine with additional drying function, which does not require the user to empty the condensed water tank when this is full.

Another object of the invention is to provide a condense heat pump tumble dryer or a washer-dryer, that does not dissipate much heat outside the cabinet, so that the ambient temperature is not increased, especially in summer.

### Summary

The present disclosure provides a water bearing drying appliance as set out in the accompanying claims.

According to a first embodiment, the present disclosure provides a drying appliance comprising a drying chamber , a drying air circuit including an air inlet path connected to a side of the drying chamber, an air outlet path connected to the other side of the drying chamber, and a drying air fan positioned along the air circuit, a heat pump system including a heat pump compressor, a first heat exchanger for heating the refrigerant and arranged at the air inlet path, a second heat exchanger for cooling the refrigerant and heating the drying air and arranged downstream of the first heat exchanger, and a third heat exchanger, provided outside the drying air circuit, wherein diverting valves provided between the second heat exchanger on one hand and the first heat exchanger and the third heat exchanger on the other hand and between the first heat exchanger and the third heat exchanger on one hand and the compressor on the other hand, respectively, are adapted to selectively connect the second heat exchanger either to the first heat exchanger or to the third heat exchanger and the compressor either to the first heat exchanger or to the third heat exchanger, and wherein the air inlet path and the air outlet path can be either connected to each other in a closed loop, to define a condense type dryer wherein the second heat exchanger is connected to the first heat exchanger and the latter to the compressor or opened to the ambient outside the cabinet to define a vented type dryer wherein the second heat exchanger is connected to the third heat exchanger and the latter to the compressor-

In a preferred embodiment, the first heat exchanger includes a heat pump evaporator, the second heat exchanger includes a condenser and the third heat exchanger includes an auxiliary evaporator. Also at least one fan 14 is provided outside the drying air circuit, so that ambient air heat can be used to heat up the third heat exchanger and the compressor. Optionally a compressor fan 8 can be arranged to cool down the compressor. If the third heat exchanger and heat pump compressor are arranged in a row, a single fan can be used both to cool down the compressor and to heat up the third heat exchanger, exploiting also the heat generated by the compressor.

Advantageously a water delivery system for directing condensate water to the compressor can be provided.

In a preferred embodiment the air inlet path and the air outlet path can be either connected to each other in a closed loop or opened to the ambient outside the cabinet by means of respective baffles/deflectors.

An electronic control unit may be connected to temperature sensors and aimed at activating the compressor fan and/or an evaporator fan.

The electronic control unit may also control the connections between said the compressor, the evaporator, the auxiliary evaporator and the condenser, in accordance to whether the air inlet path and the air outlet path are connected to each other in a closed loop, to define a condense type dryer or washer-dryer, or opened to the ambient outside the cabinet to define a vent type dryer or washer-dryer.

The present invention offers a number of benefits. One of the advantages of a preferred embodiment of the present invention is that the evaporator heat exchanger and the respective fan are placed outside the drying air circuit.

This feature is particularly advantageous because, when ambient air is sucked in, ambient heat can be used to heat up the evaporator without decreasing the temperature of the air within the drying air circuit before being heated up by the condenser.

This results in reduced energy consumption, taking advantage of ambient heat. Another advantage is that, in case of moisture condensation on the evaporator, the water can be conveyed on the compressor, in order to make it evaporate. Remaining ambient condense water not evaporated on the compressor, is collected into an open tank beneath the evaporator and the compressor cooling fan facilitates its evaporation.

Therefore, there is no need to empty a condense water collection tank as in the prior art vented heat pump dryer.

Moreover, instead of using two fans, one for the compressor and one for the evaporator, the sole compressor fan can be used both to cool down the compressor and to heat up the evaporator.

This is particularly advantageous because heat generated by the compressor can be used to heat up the evaporator instead of spreading it out in the ambient. Also this decreases the energy consumption.

All this allows producing a low energy consumption appliance.

The dryer according to a preferred embodiment of the present invention includes baffles/deflectors which enable the drying system to switch from vented mode to closed-loop condense mode.

During summer, the vented mode can be selected to avoid increasing the ambient temperature or even to cool down the ambient temperature. The heat of the ambient air is then used to hear up the auxiliary evaporator outside the drying air circuit.

However, in winter, the dryer can be switched to the condense heat pump mode to improve efficiency and to avoid the moisture carrying air to be spread out in the ambient, where the moisture can condense.

### Brief description of the drawings

Reference will now be made, by way of example, to the accompanying drawings, in which:
Figure 1 is a schematic representation of the drying system of a dryer, according to a first embodiment of the present invention;
Figure 2 is a schematic representation of the drying system of a dryer, according to a second embodiment of the present invention;
Figure 3 is a schematic representation of the drying system of a dryer, according to a variation of the second embodiment of the present invention;
Figures 4 and 5 are schematic representations of the drying system of a dryer, according to a preferred embodiment of the present invention, in two characteristic operation conditions, respectively.

### Detailed description of preferred embodiments

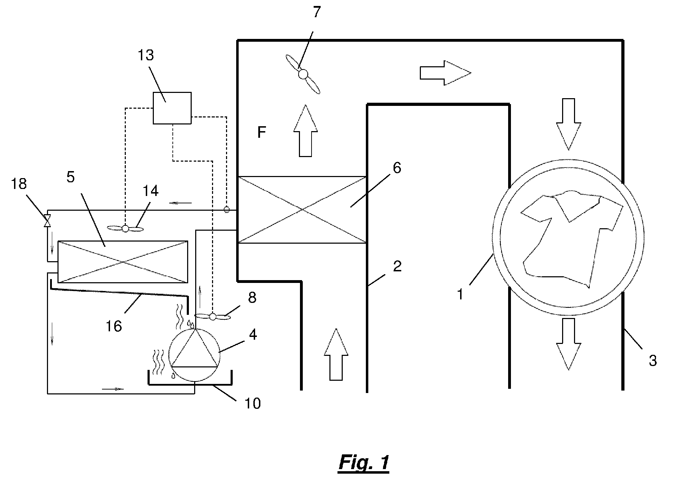

Referring to Figure 1, the drying system of an appliance, e.g. a household appliance, in particular a heat pump dryer or washer-dryer, is schematically shown.

In this respect, while in the following reference will be always made to a dryer only, for the sake of simplicity, it will be understood that also a washer-dryer can incorporate the embodiments and variations being described.

The drying system of the dryer includes a drying chamber 1 rotatably mounted in an outer cabinet, not shown and accommodating the devices of the machine. The clothes or items to be dried are introduced into the drying chamber 1, through an aperture of the cabinet, in particular into a rotatable drum, also not shown, possibly enclosed within a water bearing chamber. The drum is set into rotation by means of a driving system for instance an electric motor connected to the drum via a belt. The driving system is not shown in the Figures. Both the water bearing chamber and the rotatable drum are herein indicated as "drying chamber" for sake of simplicity (the water bearing chamber is normally present in washing/drying machine while e.g. in tumble dryers it is normally missing).

An air inlet path 2 is connected to a side of the drying chamber 1 and an air outlet path 3 is connected to the other side of the drying chamber 1. The air inlet path 2, the air outlet path 3 and the drying chamber 1 define a drying air circuit. A fan 7 is provided for moving air along the circuit, as indicated by the arrow F.

The drying system includes a heat pump system comprising a compressor 4, a first heat exchanger 5 (also called evaporator), acting as a cold sink (i.e. evaporator or gas heater in case refrigerant operates at least at critical pressure), a second heat exchanger 6, acting as a hot sink (i.e. condenser or gas cooler in case the refrigerant operates at least at critical pressure). A throttle 18 is provided between the first heat exchanger 5 and the second heat exchanger 6. Alternative solutions to the throttle include expansion means, capillary tube or controlled expansion valve). The second heat exchanger 6 is arranged along the air inlet path 2, e.g. upstream of a fan 7.

According to a first aspect of the invention, the water condensed during the drying cycle is delivered to the heat pump compressor 4 to evaporate. In detail, the water delivery system includes a collection tray 16 situated beneath said first heat exchanger 5 and the water is dropped onto the casing of the compressor 4. The water dropping onto the compressor 4 evaporates due to the heat generated by the compressor. Water that does not evaporate is collected within a water tank 10 situated beneath the compressor, and evaporates thereafter exploiting the heat caused by the proximity of the compressor 4.

According to an embodiment, the first heat exchanger or evaporator 5 preferably located outside the drying air circuit formed by the air inlet path 2, the air outlet path 3 and the drying chamber 1 and an evaporator fan 14 is provided so that ambient air can be used to heat up (or cool down, depending of the relative temperature of the ambient air and the refrigerant) the evaporator 5. An optional fan 8 which aims at cooling down the compressor, can be also provided. According to an advantageous embodiment, the evaporator 5 and the heat pump compressor 4 are arranged in a row, so that one single fan can be used both to cool down the compressor 4 and to heat up the evaporator 5. This arrangement allows a reduction of the number of parts, but more advantageously it allows exploitation of the heat generated by the compressor 4 to heat up the first heat exchanger.

This results in a decrease of energy consumption, an increase of the system efficiency and less heat being spread out to the ambient, as it is absorbed by the evaporator heat exchanger.

The air moved by the compressor fan 8 and heated by the compressor 4 can be directed to the water tank 10 situated beneath the compressor, thus promoting evaporation of the water contained therein.

An electronic control unit 13 is connected to temperature sensors for activating the compressor fan 8 and/or the evaporator fan 14.

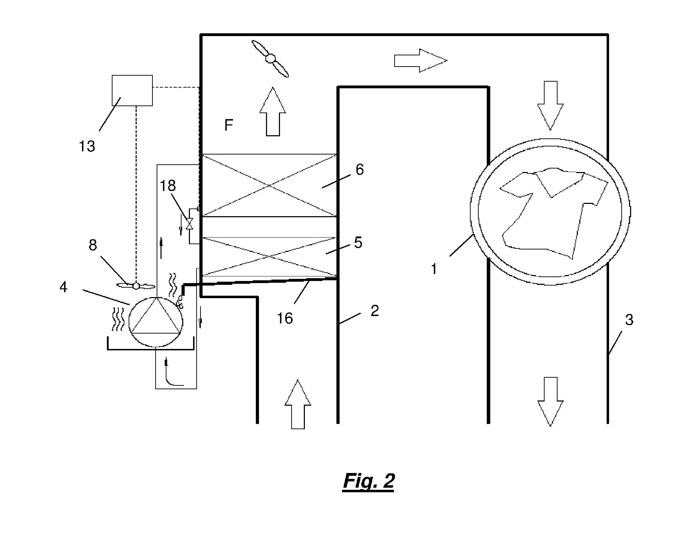

In an alternative embodiment shown in Figure 2 the first heat exchanger 5 is arranged along the air inlet path 2. This arrangement is different from the embodiment previously described, and includes a water delivery system for directing condensate water to the compressor 4, which is arranged outside the drying air circuit formed by the air inlet path 2, the air outlet path 3 and the drying chamber 1. This is expedient as usually the evaporator (the first heat exchanger) is located at the bottom of the dryer basement, so it could be difficult to transfer the condensate water from the evaporator collection tray 16 to the compressor 4 casing only by gravity.

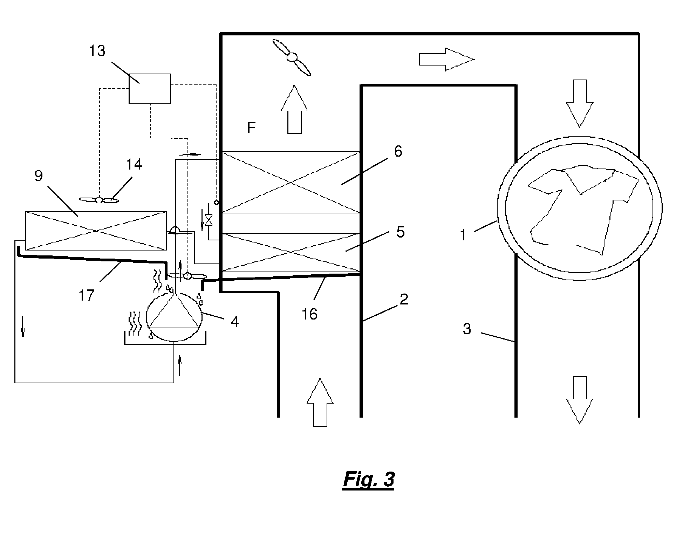

According to another embodiment, shown in Figure 3, the first heat exchanger 5, which can be defined as the main evaporator 5, is arranged along the air inlet path 2, upstream of the condenser 6, and an auxiliary evaporator 9 (third heat exchanger) is provided outside the drying air circuit. This arrangement allows a combination of the advantages of the vented type dryer with the evaporator outside the drying air circuit with the advantages of the vented type dryer having the evaporator included within the drying air circuit. The evaporator fan 14 moves ambient air through the auxiliary evaporator 9.

The heat pump circuit comprises a closed loop including the compressor 4, the condenser 6, the main evaporator 5, the auxiliary evaporator 9 and expansion means. The main evaporator 5 and the auxiliary evaporator 9 are connected in series so that the refrigerant coming from the main evaporator 5 enters the auxiliary evaporator 9.

Also in this case, an auxiliary evaporator fan 14 can be provided also for cooling down the compressor 4 other than for directing air towards the auxiliary evaporator 9.

The auxiliary evaporator fan 14 is operated by the control unit 13 for instance, as a consequence of the occurrence of one of the following conditions:
i. temperature or pressure, or both, of the refrigerant means in the heat pump system, both preferably measured near or at the outlet of the main evaporator 5, reach a predetermined value(s);
ii. temperature of the refrigerant means near or at the outlet of the auxiliary evaporator 9 reaches a predetermined value;
iii. temperature of the air near or at the auxiliary evaporator 9 reaches a predetermined value;
iv. temperature difference between the refrigerant means and the air near or at the auxiliary evaporator 9 reaches a predetermined value;
v. temperature of the drying air and/or humidity of the drying air, both preferably measured near or at the drying air inlet of the drying chamber 1 reach a predetermined value(s).

When one or more of the above conditions occurs, the control unit 13 activates the fan 14 and the auxiliary evaporator is set into operation, so as to heat or cool the refrigerant flowing through the auxiliary evaporator 9.

Auxiliary water delivery system, including an auxiliary water collecting tank 17, is provided for directing water condensed at the auxiliary evaporator 9 towards the compressor 4.

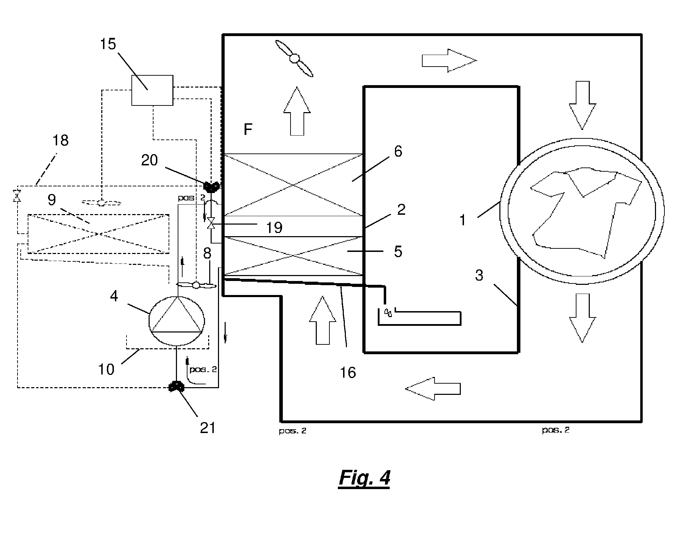

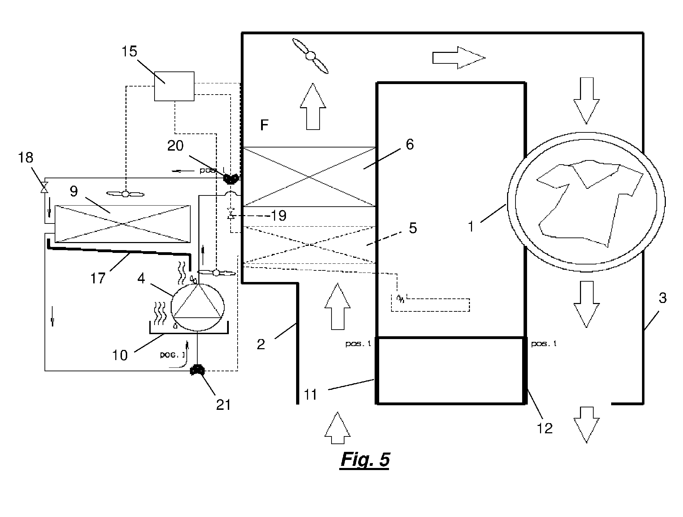

According to a preferred embodiment of the present invention, shown in Figures 4 and 5, the first heat exchanger or main evaporator 5 for heating up the refrigerant, is arranged along the air inlet path 2, upstream of the second heat exchanger or condenser 4 for cooling down the refrigerant and heat up the drying air, and an auxiliary evaporator 9 is provided outside of the drying air circuit, as in the previous embodiment.

However, in this case, the auxiliary evaporator 9 is set in parallel to the main evaporator 5 and two diverting valves 20, 21, for instance solenoid valves, are situated at the connection points between the condenser outlet pipe and the inlet pipes of the evaporator 5 and auxiliary evaporator 9 and at the connection point of the compressor inlet pipe and the outlet pipes of the evaporator 5 and auxiliary evaporator 9, respectively. An auxiliary throttle 19 is provided between the condenser 6 and the auxiliary evaporator 9. The diverting valves 20, 21 selectively connect on one hand the condenser 6 to the main evaporator 5 and the main evaporator 5 to the compressor 4 and on the other hand the condenser 6 to the auxiliary evaporator 9 and the auxiliary evaporator 9 to the compressor 4, in accordance with the mode selected so that in a first mode or closed-loop mode, depicted in figure 4 in solid lines, the refrigerant flows through compressor 4, condenser 6, main evaporator 5 and again the compressor 4 in a loop, while in a second mode or vented mode depicted in figure in solid lines, the refrigerant flows through compressor 4, condenser 6, auxiliary evaporator 9 and again the compressor 4 in a loop.

In the first mode the refrigerant by-passes the auxiliary evaporator 9 and in the second mode the refrigerant by-passes the main evaporator 5.

Furthermore, according to this embodiment of the present invention, the air inlet path 2 and the air outlet path 3 can be either connected to each other (Figure 5) in the first mode or closed-loop mode, to define a condense type dryer, or opened to the ambient outside the cabinet (Figure 4) in the second mode or vented mode to define a vent type dryer.

The connection between the air inlet path 2 and the air outlet path 3, in the condense heat pump closed loop mode, is made possible by operation of respective baffles/deflectors 11, 12, which, in another condition, open the air inlet path 2 and the air outlet path 3 to the ambient outside the cabinet.

In this arrangement, auxiliary means, formed by an auxiliary water collection tank 17 and an auxiliary water delivery system are provided for directing water condensed at the auxiliary evaporator 9 towards the compressor 4.

Also in this case an electronic control unit 15 is provided and connected to the dryer control panel and to temperature sensors for activating the evaporator fan 14 and the (optional) compressor fan 8, as well as to control the connections between the compressor 4, the evaporator 5, the auxiliary evaporator 9 and the condenser 6, in accordance to whether the condense heat pump closed loop mode or the vented mode is selected, via operation of the diverting valves 20, 21 and the baffles/deflectors 11, 12.

In fact, in the first mode or closed-loop mode (Figure 4, air inlet path 2 and air outlet path 3 connected to each other in a closed loop), the main evaporator 5 is activated (see Figure 4, where the auxiliary evaporator 9 is in phantom is by-passed by the refrigerant). Conversely, in the second mode or vented mode (Figure 5, inlet path 2 and air outlet path 3 opened to the outside), the auxiliary evaporator 9 is activated (see Figure 5, where the main evaporator 5 in phantom is by-passed by the refrigerant).

Auxiliary means, consisting of an auxiliary collection tray 17, and an auxiliary water delivery system are provided for directing water condensed at the auxiliary evaporator 9 towards the compressor 4, as already mentioned for the previous embodiments.

The vented heat pump laundry dryer of the present invention includes a drying system which is open but it can be switched from the open mode to the close-loop mode.

In the solution according to the invention there is provided a specific arrangement that in practice does not need a condensate water collecting system. The heat available on the compressor casing (around 100°C) is used to make the water evaporating.

As regards the vented mode of the dryer (preferably selected in summer), a temperature sensor is provided to detect the refrigerant temperature (preferably between the condenser outlet pipe and the evaporator). The auxiliary evaporator fan is activated during the in the second mode or vented mode, and it can includes a variable speed fan.

The dryer control panel can include a command portion to allow the user to switch between vented mode and the closed-loop mode, because in vented mode, when the environment temperature is low (e.g. in winter time), the efficiency of the evaporator can be negatively impacted and the reduction of temperature caused by the evaporation process is not recommendable.

A temperature sensor can be provided in the ambient to monitor the ambient temperature and can warn (via acoustic or display means) the user to switch to closed-loop mode (winter mode) when the ambient temperature is below a predetermined temperature, or to the vented mode (summer mode) when the ambient temperature is above a predetermined temperature.

According to an improved arrangement, the control unit of the dryer can choose between vented mode and closed-loop mode in response to the ambient temperature detected.

It will be understood that, while in the foregoing reference was mainly made to a household appliance embodied in the form of a laundry dryer, the present invention is suitable for either a dryer or a washer-dryer, and in general for any apparatus intended for drying clothes, having an article drying chamber, where the clothes to be dried are introduced, and a heat pump system for supplying heated dried air to the article drying chamber.

It will be appreciated that alterations and modifications may be made to the above without departing from the scope of the disclosure. Naturally, in order to satisfy local and specific requirements, a person skilled in the art may apply to the solution described above many modifications and alterations. Particularly, although the present disclosure has been described with a certain degree of particularity with reference to preferred embodiment(s) thereof, it should be understood that various omissions, substitutions and changes in the form and details as well as other embodiments are possible; moreover, it is expressly intended that specific elements described in connection with any disclosed embodiment of the disclosure may be incorporated in any other embodiment as a general matter of design choice.

For example, similar considerations apply if the components have different structure or include equivalent units. Also, it should be easily understood by those skilled in the art that the present invention may be extended to a large variety of household appliances not only to a tumble dryer machine that has been used in the above description as mere example of how the present invention may be embodied.

## Claims

1. A drying appliance comprising
a drying chamber 1,
a drying air circuit including an air inlet path (2) connected to a side of the drying chamber (1), an air outlet path (3) connected to the other side of the drying chamber (1), and a drying air fan (7) positioned along the air circuit,
a heat pump system including a heat pump compressor (4), a first heat exchanger (5) for heating the refrigerant and arranged at the air inlet path (2), a second heat exchanger (6) for cooling the refrigerant and heating the drying air and arranged downstream of the first heat exchanger (5), and a third heat exchanger (9), provided outside the drying air circuit, **characterized in that** diverting valves (20, 21) provided between the second heat exchanger (6) on one hand and the first heat exchanger (5) and the third heat exchanger (9) on the other hand and between the first heat exchanger (5) and the third heat exchanger (9) on one hand and the compressor (4) on the other hand, respectively, are adapted to selectively connect the second heat exchanger (6) either to the first heat exchanger (5) or to the third heat exchanger (9) and the compressor (4) either to the first heat exchanger (5) or to the third heat exchanger (9), and wherein the air inlet path (2) and the air outlet path (3) can be either connected to each other in a closed loop, to define a condense type dryer wherein the second heat exchanger (6) is connected to the first heat exchanger (5) and the latter to the compressor (4) or opened to the ambient outside the cabinet to define a vented type dryer wherein the second heat exchanger (6) is connected to the third heat exchanger (9) and the latter to the compressor (4).

2. The drying appliance of claim 1, wherein in the condense type dryer the refrigerant by-passes the auxiliary evaporator (9) and in vented type dryer the refrigerant by-passes the main evaporator (5).

3. The drying appliance of claim 1 or 2, wherein the first heat exchanger (5) includes an evaporator, the second heat exchanger (6) includes a condenser and the third heat exchanger (9) includes an auxiliary evaporator.

4. The drying appliance of any preceding claim wherein at least one fan 14 is provided outside the drying air circuit, so that ambient air can exchange heat with the third heat exchanger (9).

5. The drying appliance of any preceding claim further including a compressor fan (8) arranged to cool down the compressor (4).

6. The drying appliance of any claim 1 to 4, wherein the third heat exchanger (9) and heat pump compressor (4) are arranged in a row, so that a single fan (14) can be used both to cool down the compressor (4) and to promote the heat exchange between the third heat exchanger (9) and ambient air.

7. The drying appliance of any preceding claim further including a water delivery system for directing condensate water to the compressor (4).

8. The drying appliance of any preceding claim, wherein the air inlet path (2) and the air outlet path (3) can be either connected to each other in a closed loop or opened to the ambient outside the cabinet by means of respective baffles/deflectors (11, 12).

9. The drying appliance of any preceding claim, wherein a water tank (10) is provided beneath the heat pump compressor (4), to collect water that does not evaporate, and wherein a compressor fan (8) is used to convey hot air from the compressor (4) towards the water tank (10) to make the water contained therein evaporate.

10. The drying appliance of any preceding claim, further including an electronic control unit (13) connected to temperature sensors and aimed at activating at least the fan evaporator (14) and the compressor fan 8 when this latter is present.

11. The drying appliance of any preceding claim, further including an electronic control unit (15) connected to temperature sensors and aimed at activating at least the fan evaporator (14) and the compressor fan (8)when this latter is present, as well as to operate said diverting valves (20, 21) to control the connections between said compressor (4), said evaporator (5), said auxiliary evaporator (9) and said condenser (6), in accordance to whether said air inlet path (2) and said air outlet path (3) are connected to each other in a closed loop, to define a condense type dryer, or opened to the ambient outside the cabinet to define a vent type dryer.

12. A washing machine including the drying appliance of any preceding claim.
